# EUROPÄISCHE PATENTSCHRIFT

(11) **EP 0 824 440 B1**
(45) Veröffentlichungstag und Bekanntmachung des Hinweises auf die Patenterteilung: **26.04.2000**
(21) Anmeldenummer: 97905006.9
(22) Anmeldetag: 07.02.1997
(51) Int. Cl.: B62D 43/10

(54) **BEFESTIGUNGSVORRICHTUNG FÜR KRAFTFAHRZEUGRÄDER**
SECURING DEVICE FOR MOTOR VEHICLE WHEELS
DISPOSITIF DE FIXATION DE ROUES DE VEHICULES A MOTEUR

(30) Priorität: 08.03.1996 DE 19609000
(43) Veröffentlichungstag der Anmeldung: 25.02.1998
(73) Patentinhaber: AUDI AG, 85045 Ingolstadt (DE)
(72) Erfinder: STRELLER, Adolf, D-92334 Berching (DE); NEUBERGER, Jörg, D-85114 Tauberfeld (DE); STANGL, Rolf, D-85051 Ingolstadt (DE)
(74) Vertreter: Geissler, Manfred
(86) Internationale Anmeldenummer: EP9700556
(87) Internationale Veröffentlichungsnummer: WO9732771

(56) Entgegenhaltungen:
- DE-A- 3 733 535
- FR-A- 527 029
- US-A- 2 720 795
- US-A- 4 794 771

## Beschreibung

Die Erfindung betrifft eine Befestigungsvorrichtung für Kraftfahrzeugräder gemäß der im Oberbegriff des Patentanspruches 1 erläuterten Art.

Bei in der Serienproduktion gefertigten Fahrzeugen ist es üblich, daß ein bestimmtes Fahrzeugmodell je nach Motorisierung und Ausstattungsvariante mit unterschiedlichen Bereifungen versehen wird, was zur Folge hat, daß beispielsweise ein in einer Karosseriemulde untergebrachtes Reserverad unterschiedliche Abmessungen hat, auch bezüglich Höhenlage und Größe einer Felgen-Durchgangsöffnung an der üblicherweise die Befestigungsvorrichtung für das Reserverad angreift.

Es ist weiter üblich, daß eine Abdeckplatte für die Reserveradmulde vorgesehen ist, die gleichzeitig den Boden eines Gepäckraumes bildet. Zweckmäßigerweise kann, und auch dies ist im Stand der Technik bekannt, die Befestigungsvorrichtung gleichzeitig dafür verwendet werden, die Abdeckplatte mittig zu unterstützen, damit deren Tragfähigkeit erhöht ist.

Eine solche Befestigungsvorrichtung ist in der DE 37 16 866 A1 beschrieben. Sie besteht im wesentlichen aus einem Schraubteil und einer Tragscheibe, die über eine Solltrennstelle miteinander verbunden sind, die beim Aufschrauben des Schraubteiles auf einen die Felge des Reserverades durchsetzenden Schraubenbolzen nach Aufsitzen der Tragscheibe auf diesem durchgetrennt wird.

Zwar ist damit erreichbar, daß bei der Erstmontage zur Befestigung des Reserverades und für die Abstützung der Abdeckplatte nur ein einziges Bauteil gehandhabt werden muß. Wird allerdings danach das Reserverad wieder entnommen und dasselbe oder ein anderes in die Reserveradmulde eingelegt, so muß auf umständliche Weise doch wieder mit zwei separaten Bauteilen, nämlich dem Schraubteil und der Tragscheibe, hantiert werden.

Aus der DE 37 33 535 C2 ist weiterhin eine Befestigungsvorrichtung für Kraftfahrzeugräder bekannt geworden, im wesentlichen bestehend aus einem auf einen Gewindebolzen aufschraubbaren, im wesentlichen säulenförmig ausgebildeten, einteiligen und von daher einfach zu handhabenden Befestigungselement, welches mit einem außermittig, in ungleichem Abstand von den beiden Enden des Befestigungselementes angeordnetem Flansch versehen ist, der mit der Felgen-Durchgangsöffnung des Kraftfahrzeugrades für dessen Befestigung zusammenwirkt.

Die vorbeschriebene Befestigungsvorrichtung erlaubt allerdings lediglich ein Anpassen an zwei unterschiedlich große Kraftfahrzeugräder, da sie in erster Linie auch für die alternative Befestigung eines Not- oder Normalrades konzipiert ist.

Aus der US-A 4,794,771 geht schließlich eine Befestigungsvorrichtung für Kraftfahrzeugräder mit unterschiedlicher Höhe einer der Befestigung dienenden Felgen-Durchgangsöffnung hervor, wobei die Befestigungsvorrichtung mit einem die Felgen-Durchgangsöffnung lotrecht durchdringenden, säulenförmig ausgebildeten Befestigungselement ausgestattet ist, welches einen an die Höhe der Felgen-Durchgangsöffnung anpassbaren und mit ihr zusammenwirkenden Ringflansch aufweist. Dieser ist entlang der mit einer Anzahl von Umfangsnuten ausgestatteten Säule des Befestigungselementes verschiebbar und über einen ebenfalls unterschiedlich positionierbaren Anschlag festlegbar.
Das Kraftfahrzeugrad wird dabei hängend gehalten, wobei dessen Gewicht im wesentlichen von einem Halteseil mit daran angeschlossener Platte aufgenommen wird. Die zuvor beschriebene Befestigungsvorrichtung dient im wesentlichen dem Diebstahlschutz, wobei der unterschiedlich positionierbare Anschlag als schlüsselbetätigter Verriegelungsmechanismus ausgebildet ist. Auch aus diesem Grunde ist der konstruktive Aufbau des besagten Anschlages relativ komplex.

Von daher liegt der Erfindung die Aufgabe zugrunde, eine Befestigungsvorrichtung gemäß Oberbegriff des Patentanspruches 1 konstruktiv und funktional weiter zu vereinfachen.

Zur Lösung dieser Aufgabe werden die im kennzeichnenden Teil des Patentanspruches 1 dargelegten weiteren Merkmale vorgeschlagen.

Die Maßnahme der Erfindung, wonach als Anschlag für den Flansch ein elastischer Ring dient, der wahlweise in verschiedene Ringnuten entlang der Säulenform des Befestigungselementes einlegbar ist, ist eine Anpassung des Befestigungselementes an unterschiedlichen Fahrzeugradgrößen auf besonders einfache und rasche Weise möglich. Die im wesentlichen plane Ausbildung der Säulen-Stirnfläche gemäß Patentanspruch 2 erlaubt in vorteilhafter Weise die gleichzeitige Verwendung des Befestigungselementes als Auflage für eine Abdeckplatte.

Ein Ausführungsbeispiel der Erfindung ist in der Zeichnung dargestellt und wird im folgenden erläutert. Dabei zeigt
- Fig. 1: eine perspektivische Gesamtansicht eines Kraftfahrzeug-Gepäckraumes mit einzulegendem Reserverad und dem erfindungsgemäßen Befestigungselement und
- Fig. 2: eine Einzeldarstellung des Befestigungselementes in vergrößertem Maßstab.

Die erfindungsgemäße Befestigungsvorrichtung ist insbesondere für Reserveräder 1 in Personenkraftwagen 2 bestimmt, die in muldenförmigen Vertiefungen 3 im Boden 4 eines Gepäckraumes 5 untergebracht sind.

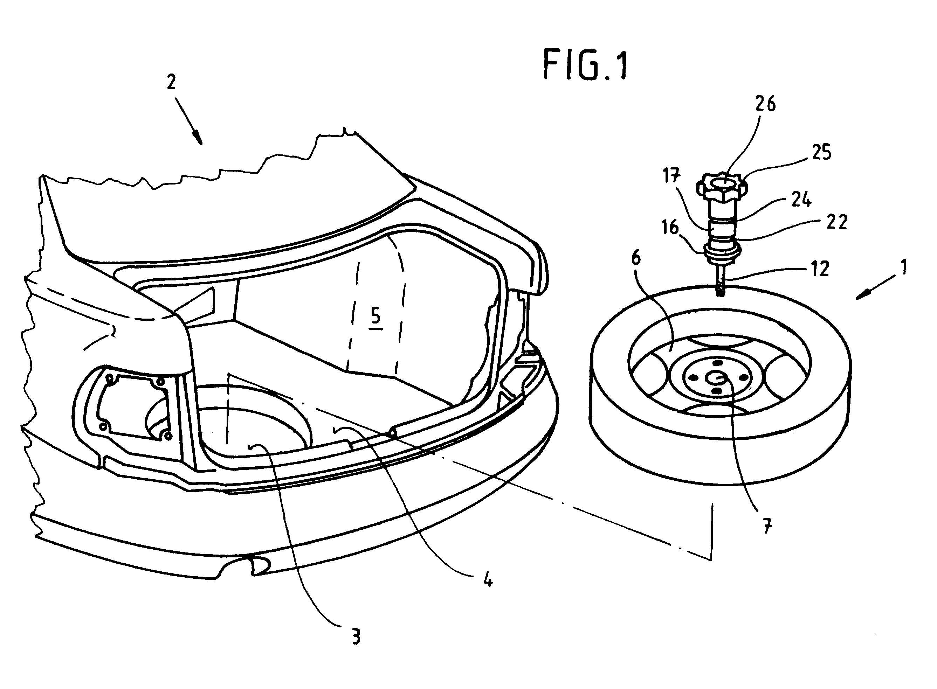

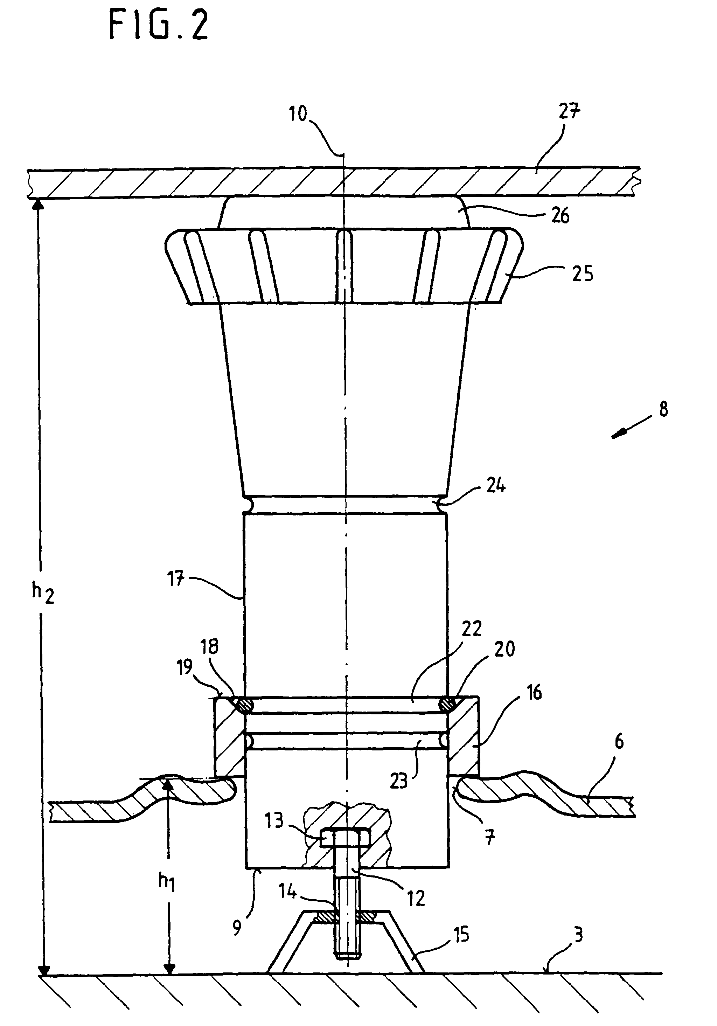

Wie aus der Zusammenschau der Fig. 1 und 2 weiter hervorgeht, weist das Reserverad 1 eine Felge 6 mit mittiger Durchgangsöffnung 7 auf. Diese wird lotrecht von einem Befestigungselement 8 durchdrungen, welches eine im wesentlichen säulenförmige Gestalt (Säule 17) aufweist.

Aus einer unteren Stirnfläche 9 des Befestigungselementes 8 ragt zentrisch (Längsachse 10) ein Schraubenbolzen 12 hervor, dessen Kopf 13 formschlüssig in das vorzugsweise aus einem Kunststoff bestehende Befestigungselement 8 eingesetzt ist. Über diesen Schraubenbolzen 12 wird das Befestigungselement 8 in ein Muttergewinde 14 eines in der muldenförmigen Vertiefung 3 angeordneten Sockels 15 geschraubt.

Bei diesem Schraubvorgang wird über ein Ringflansch 16, der das Befestigungselement 8 umgibt, die Reserverad-Felge 6 im Bereich der Durchgangsöffnung 7 beaufschlagt und somit in der muldenförmigen Vertiefung 3 befestigt. Dabei stützt sich der Ringflansch 16 mit einem abgeschrägten Bereich 18 seiner oberen Stirnseite 19 an einem Ring 20 aus einem elastischen Werkstoff (vorzugsweie Gummi) ab, der in eine Umfangsnut 22 der Säule 17 eingelegt ist.

Die Anordnung der Umfangsnut 22 ist dabei so gewählt, daß bei einer Höhe h1 der Felgen-Durchgangsöffnung 7 bezogen auf die durch die muldenförmige Vertiefung 3 vorgegebene Auflagefläche des Reserverades 1 eine sichere Befestigung desselben erfolgen kann.

Entsprechend der denkbaren Alternativen unterschiedlicher Reserveradabmessungen sind entlang der Säule 17 weitere Umfangsnuten 23,24 vorgesehen, in die der elastische Ring 20 wahlweise eingelegt werden kann. Damit ist der Anschlag für den Ringflansch 16 in beliebiger Weise änderbar.

Im oberen Bereich ist das Befestigungselement 8 mit einem Sterngriff 25 ausgestattet, über den es auf einfache Weise manuell auf den Sockel 15 aufgeschraubt werden kann.

Den oberen Abschluß des Befestigungselementes 8 bildet ein Deckel 26, der gleichzeitig als plane Auflage für eine Abdeckplatte 27 der muldenförmigen Vertiefung 3 dient. Die Abdeckplatte 27, die insofern auch Teil des Gepäckraumbodens 4 ist, wird dadurch wesentlich tragfähiger.

Die Höhe des Befestigungselementes 8 ist auf den an sich konstanten Abstand h2 zwischen der Abdeckplatte 27 und der muldenförmigen Vertiefung 3 abgestimmt. Eine gewisse Anpassbarkeit, auch bezüglich mehr oder weniger geringfügiger Differenzen bezüglich der Höhe h1, ist dadurch gegeben, daß der Schraubenbolzen 12 mehr oder weniger tief in das Muttergewinde 14 des Sockels 15 eingeschraubt werden kann.

Die Erfindung ist nicht auf die Befestigung eines Reserverades 1 in einer muldenförmigen Vertiefung 3 in einem Fahrzeug-Gepäckraum 5 beschränkt, sondern überall dort anwendbar, wo entsprechende Einbauverhältnisse eine solchermaßen flexible Befestigungsvorrichtung erforderlich machen.

## Patentansprüche

1. Befestigungsvorrichtung für Kraftfahrzeugräder (1) mit unterschiedlicher Höhe (h1) einer der Befestigung dienenden Felgen-Durchgangsöffnung (7), mit einem die Felgen-Durchgangsöffnung (7) lotrecht durchdringenden, säulenförmig ausgebildeten Befestigungselement (8), welches einen an die Höhe (h1) der Felgen-Durchgangsöffnung (7) anpassbaren und mit ihr zusammenwirkenden Ringflansch (16) aufweist, der entlang der mit einer Anzahl von Umfangsnuten (22-24) ausgestatteten Säule (17) des Befestigungselementes (8) verschiebbar und über einen ebenfalls unterschiedlich positionierbaren Anschlag (20) festlegbar ist, **dadurch gekennzeichnet,** daß der Anschlag als wahlweise in eine der Umfangsnuten (22-24) einsetzbarer elastischer Ring (20) ausgebildet ist, an dem sich der Ringflansch (16) abstützt.

2. Befestigungsvorrichtung nach Anspruch 1, **dadurch gekennzeichnet,** daß weiterhin eine obere Stirnfläche (26) des Befestigungselementes (8) im wesentlichen plan ausgebildet ist und als Auflagefläche dient.

3. Befestigungsvorrichtung nach Anspruch 1, **dadurch gekennzeichnet,** daß das Befestigungselement (8) im oberen Bereich mit einem Sterngriff (25) zur manuellen Handhabung ausgestattet ist.

## Claims

1. Fixing device for motor vehicle wheels (1) with different heights (h1) of a rim through-hole (7) used for fixing the wheel, having a fixing element (8) of pillar-like construction which passes vertically through the rim through-hole (7) and which incorporates a ring flange (16) which can be adapted to the height (h1) of the rim through-hole (7) and cooperates therewith, said ring flange being adapted to be displaced along the pillar (17), which is equipped with a number of circumferential grooves (22-24), and to be located via a limit stop (20) which can likewise be positioned in different ways, characterised in that the limit stop is constructed as a flexible ring (20) adapted to be inserted into one of the circumferential grooves (22-24) as required, and against which the ring flange (16) rests.

2. Fixing device according to claim 1, characterised in that furthermore an upper end surface (26) of the fixing element (8) is constructed to be essentially plane and serves as a contact surface.

3. Fixing device according to claim 1, characterised in that the fixing element (8) is equipped in the upper region with a star grip (25) for manual handling.

## Revendications

1. Dispositif de fixation de roues de véhicules automobiles (1), ayant une valeur différente de la hauteur (h1) d'une ouverture de passage de jante (7), servant à la fixation, avec un élément de fixation (8) réalisé en forme de colonne traversant verticalement l'ouverture de passage de jante (7), élément de fixation présentant une bride annulaire (16) adaptable à la hauteur (h1) de l'ouverture de passage de jante (7) et coopérant avec elle, déplaçable le long de la colonne (17), dotée d'une pluralité de gorges périphériques (22-24), de l'élément de fixation (8), et susceptible d'être fixée par l'intermédiaire d'une butée (20) pouvant être positionnée également de façon différente, caractérisé en ce que la butée est réalisée sous la forme d'un anneau élastique (20) susceptible d'être inséré à volonté dans l'une des gorges périphériques (22-24), anneau sur lequel la bride annulaire (16) prend appui.

2. Dispositif de fixation selon la revendication 1, caractérisé en ce que, en outre, une face frontale supérieure (26) de l'élément de fixation (8) est réalisée de façon sensiblement plane et sert de surface de pose.

3. Dispositif de fixation selon la revendication 1, caractérisé en ce que l'élément de fixation (8) est équipé dans la zone supérieure d'une poignée-étoile (25) pour la manipulation manuelle.
